# EUROPEAN PATENT APPLICATION

(11) **EP 1 768 127 A1**
(43) Date of publication of application: **28.03.2007**
(21) Application number: 05741598.6
(22) Date of filing: 19.05.2005
(51) Int. Cl.: G11B 27/10, G11B 20/10, G11B 20/12, G11B 27/00, H04N 5/93

(54) **INFORMATION REGENERATION DEVICE, INFORMATION REGENERATION METHOD AND SO ON**

(30) Priority: 24.05.2004 JP 2004153413
(71) Applicant: Pioneer Corporation, Tokyo 153-8654 (JP)
(72) Inventor: OTSUKA, N. c/o Pioneer Corporation Kawagoe Works, Kawagoe-shi Saitama 350-8555 (JP)
(74) Representative: Tappe, Hartmut
(86) International application number: PCT/JP2005/009183
(87) International publication number: WO 2005/114666

(57) **Abstract**

To provide an information recording medium, an information reproducing apparatus and method, and so on, which enable automatic reproduction of recording information desired by a user without a user's selection of selection button.

The information recording medium according to the present invention is provided to record at least, recorded information separated into a plurality of pieces, reproduction control information for reproducing the recorded information, sub-picture information constituting selection items, displayed so as to be selected, and command information for stipulating a command executed when the selection item is selected and firmed, wherein the information recording medium including:
specified information for specifying recorded information to be reproduced by executing the command recorded on it.

## Description

### TECHNICAL FIELD

The present invention relates to a technical field of an information recording medium which records at least recorded information segmented into plural portions, reproducing control information for reproducing the recorded information, sub-picture information constituting selection items which are displayed so as to be selected, and command information of stipulating a command which is executed when selection of the selection item is firmed, method and so on provided to reproduce recorded information recorded on the information recording medium.

### BACKGROUND ART

In recent years, for example, DVD in compliance with the DVD (Digital Versatile Disc)-Video(hereinafter, referred to as video DVD) standard, which is supposed to record a movie and so on, DVD in compliance with the DVD (Digital Versatile Disc)-Audio(hereinafter, referred to as audio DVD) standard, which is supposed to record music and so on, and a DVD reproducing apparatus for reproducing information out of these DVDs (a generic name containing the video DVD and the audio DVD) are widely known.

In such the DVD apparatuses, it is ordinary that when a user conducts a reproduction operation, information recorded on a DVD is reproduced, and a menu for selecting a title and so on is first displayed on a display screen. In such a menu, a plurality of buttons are displayed to enable selection of the title and so on. When a user operates an operation unit, and selects and firms the selection button, a command corresponding to the selected button is executed and, in many cases, picture information and sound information in titles corresponding to these are reproduced and outputted. In other words, picture information and sound information included in a title corresponding to these are not reproduced and outputted until selection of selection button in a menu is firmed.

On the other hand, there is a DVD reproducing apparatus, which has a so-called auto-play function of automatically reproducing and outputting picture information, sound information and so on in a title after a menu is displayed and a predetermined time passes over.

Information for displaying selection buttons in the menu on a display screen so that the selection buttons can be selected is recorded in advance on a DVD in compliance with the above standards, as described in, for example, Patent Document 1.
Patent Document 1: Japanese Unexamined Patent Publication No. 2004-47081.

### DISCLOSURE OF THE INVENTION

### Problems to be Solved by the Invention

Meanwhile, in an example of DVD reproducing apparatus without having the auto-play function, picture information, sound information and so on, concerning the title are not reproduced until a selection button in a menu is selected and fixed by a user by operating an operation unit. Therefore, there is a case where the user feels it vexatious to operate as such (for example, a user cannot operate an operation unit of in-vehicle DVD reproducing apparatus during he or her drives) .

On the other hand, in an example of DVD reproducing apparatus having an auto-play function, picture information or the like is automatically reproduced and outputted after a lapse of a predetermined time without operation by a user of selecting and firming a selection button. However, in this case, a command corresponding to a selection button having the youngest button number (it is arbitrarily determined by, for example, a manufacturer which title is allocated to which selection button) is executed, and picture information, sound information or the like corresponding to a title is reproduced. Therefore, it is not sure that picture information or the like, corresponding to a title desired by the user, is always reproduced.

Therefore, the present invention is to solve such the problem as one object, and provide an information recording medium, an information reproducing apparatus, and an information reproducing method, which can automatically reproduce recorded information desired by a user, even when the user does not select on a selection button. Means for Solving the Problem

In order to solve the above problem, an information recording medium recited in Claim 1 is characterized by recording recorded information, which is separated to at least a plurality of pieces, reproduction control information for reproducing the recorded information; sub-picture information constituting selection items displayed so as to be selectable; and command information stipulating a command which is executed when the selection item is selected and firmed, characterized in that specified information for specifying the recorded information to be reproduced by executing the command is recorded on the information recording medium.

An information reproducing apparatus recited in Claim 5 is an information reproducing apparatus for reproducing the recorded information recorded on the information recording medium, characterized by including; designated information acquiring means for acquiring designated information for designating the recorded information to be reproduced; specified information acquiring means for acquiring the specified information which is recorded on the information recording medium; a specified information searching means for searching the specified information corresponding to the designated information thus acquired; and a command executing means for executing a command stipulated in command information corresponding to the specified information thus searched.

An information reproducing method recited in Claim 7 is an information reproducing method for reproducing recoded information thus recorded on the information recording medium, characterized by including: a step of obtaining designated information for designating the recorded information to be reproduced; a step of acquiring the specified information recorded on the information recording medium; a step of searching the specified information corresponding to the designated information thus acquired out of the specified information thus obtained; and a step of executing a command stipulated by command information corresponding to the specified information thus searched.

An information reproduction processing program recited in Claim 8 is characterized by causing a computer for reproducing the recorded information, recorded in the information recording medium, to function as: a designated information acquiring means for acquiring designated information for designating the recorded information to be reproduced; a specified information acquiring means for acquiring the specified information recorded on the information recording medium; a specified information searching means for searching the specified information corresponding to the designated information thus acquired out of the specified information thus acquired; and a command execution means for executing a command stipulated by command information corresponding to the specified information thus searched.

An information recording medium recited in Claim 9 is characterized in that the information reproduction processing program recited in Claim 8 is recorded so as to be readable by a computer.

### Brief Description of Drawings

[Figure 1] A view for showing a logical data structure in a video DVD.
[Figure 2] A view for showing a logical data structure in a video DVD.
[Figure 3] A view for showing a logical data structure in an audio DVD.
[Figure 4] A view for showing a logical data structure in an audio DVD.
[Figure 5] A view for schematically showing an example a DVD reproducing apparatus structure in an embodiment.
[Figure 6] A flowchart for showing a command automatic execution process in a system controller 18 according to Embodiment 1.
[Figure 7] A flowchart for showing a command automatic execution process in a system controller 18 according to Embodiment 2.
[Figure 8] A flowchart for showing a command automatic execution process in a system controller 18 according to Embodiment 3.

### Explanation of Numerical References

- 1: Video DVD
- 2: Audio DVD
- 3: Spindle Motor
- 4: Optical Pickup
- 5: Transfer Motor
- 6: RF amplifier
- 7: Servo Control Unit
- 8: Digital Signal Processing Unit
- 9: Buffer Memory
- 10: Stream Separating Unit
- 11: Video Decoder
- 12: Audio Decoder
- 13: Sub-picture Decoder
- 14: Video Processor
- 15: D/A Conversion Unit
- 16: Video Encoder
- 17: Communication Unit
- 18: System Controller
- 19: Memory Unit
- 20: Operation Unit
- 21: Sound Recognition Unit
- S: DVD Reproducing Apparatus

### Best Mode for Carrying out the Invention

Hereinafter, abestmode for carrying out the present invention will be described in reference of attached drawings. The embodiments described below are in a case where the present application is applied to a DVD reproducing apparatus (DVD player) reproducing recorded information, which are recorded on a DVD, and recorded information recorded on the DVD.

### (1) Logical Data Structure of Video DVD

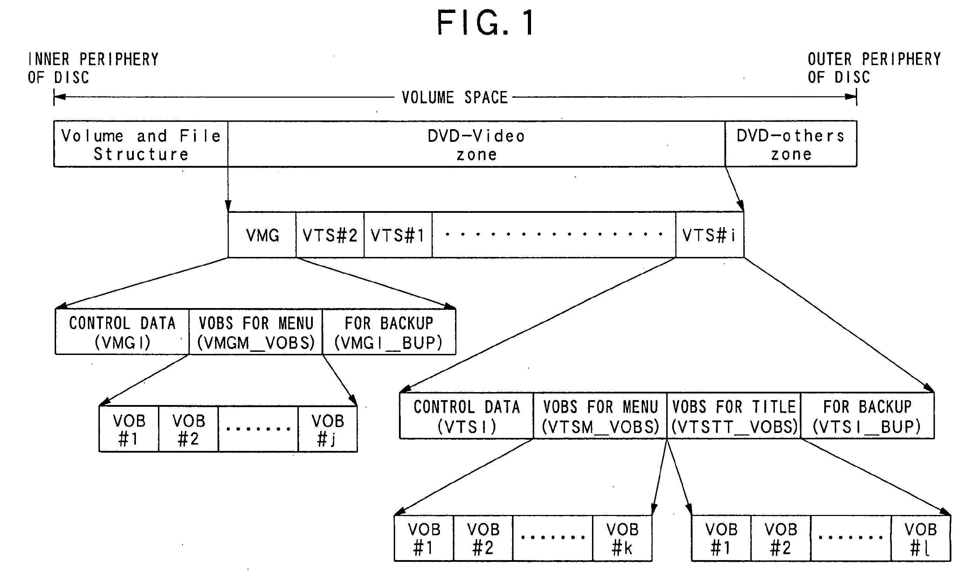

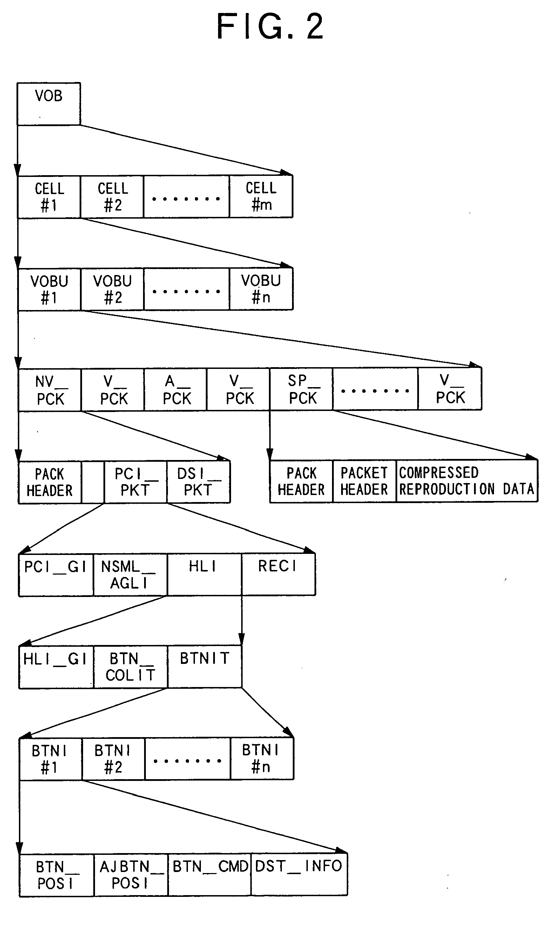

First, a logical data structure (format) in a video DVD will be described in reference of Figures 1 and 2.

Figures 1 and 2 are drawings showing a logical data structure in a video DVD.

As shown in Figure 1, a volume space of video DVD 1 is roughly separated into Volume and Filestrucure where control information of logical format is described, DVD-Video zone, and DVD other zone, are recorded in compliance with standards of UDF (Universal Disc Format) and ISO966. The DVD-Video zone is a data storing region where DVD data including recording information and reproducing information, related to the present invention, are recorded. Further, all information necessary for reproducing DVD data is stored (recorded) in the DVD-Video zone. The DVD-Video zone is constituted by one VMG (Video Manager), and VTS#1 to VTS#i (Video Title Sets) as many as one or more and ninety nine or less.

VMG is constituted by VMGM_VOBS(Video Object Set for VMG Menu) for a VMG menu, being a substance of reproduction stream; VMGI (Video Manager Information), being a PGCI (Program Chain Information)as reproduction control information related to a method of reproducing VMGM_VOBS and control information indicative of reproduction stream attribute or the like; and VMGI_BUP, being backup data of VMGI.

Each of VTS#1 to VTS#i is constituted by VTSM_VOBS (Video Object Set for VTS Menu) for a VTS menu, being a substance of reproduction stream; VTSTT_VOBS (Video Object Set for Video Title) for a title; VTSI (Video Title Set Information), being PGCI as reproduction control information related to a method of reproducing VTSM_VOBS and VTSTT_VOBS and control information indicative of reproduction stream attribute or the like; and VTSI_BUP, being backup data of VTSI.

The terminology "VTS" is a set (group) of titles (one product to be presented by a manufacturer of a movie or the like to audiences) which are related to each other and packed into one, where how related depends on equality of numbers of picture information, sound information, and sub-picture information, and of attributes of specification, language, and so on. The terminology "PGCI" is a logical processing unit of indicating a reproduction method by designating a reproduction order of cells to be described below.

The above VMGM_VOBS, VTSM_VOBS, and VTSTT_VOBS are respectively constituted by one or more VOB#1 to VOB#j, VOB#1 to VOB#k, and VOB#1 to VOB#t. Further, each of these VOBs is further constituted by a plurality of cells as shown in Figure 2 (Cells #1 to #m in VMGM_VOBS are shown as a representative example). Namely, recorded information in each of VOBs is respectively separated into a plurality of cells, respectively having ID number.

These cells are a unit of reproducing real time data. A plurality of cells may be provided in the VMG and VTS, and an order of reproduction is designated by the above PGCI. More specifically, by combining a plurality of cells, one program is logically constituted. Further, one PGC (Program Chain) is logically constituted by combining a plurality of programs. The PGCI is defined in a unit of PGC. The PGCI includes a reproduction order of cells in each of the programs in reproducing the programs, addresses of recording a position with respect to each of the cells on the video DVD 1, an ID number of a head cell to be reproduced in one program, and so on. In one of the PGCs, picture information, sound information and so on are contained as a combination of programs (in other words, as a combination of cells) other than the above PGCI.

A menu to be described below is constituted by PGC which is constituted by cells in VMGM_VOBS or VMTS_VOBS. Further, a group of PGCs of more than one for reproducing a menu constituted in use of VMGM_VOBS is referred to as a VMGM domain. A group of PGCs of more than one for reproducing a menu constituted in use of VTSM_VOBS is referred to as a VTSM domain.

Further, each of cells (for explanation, represented by cell #1) is respectively constituted by a plurality of VOBU #1 to VOBU #n (VOBU: Video Object Unit)respectively having ID number. Further, each VOBU (for explanation, represented by VOBU #1) is constituted by NV_PCK (Navigation Pack) which is provided at the head, and V_PCK(Video Pack), A_PCK(Audio Pack), and SP_PCK(Sub-picture Pack),which are respectively provided when necessary in a manner of time division. A pack header is recorded at the head of each of the PCKs(pack). Each of the pack headers includes read-out time starting time information, called as SCR(System Clock Reference) indicative of a read-out starting time, when read-out from a track buffer in a DVD reproducing apparatus described below and input to buffers are started, on a reproduction time axis; a start code indicative of start of PCK; and so on.

V_PCK includes picture information (video data), and is constituted by, for example, one or a plurality of GOPs (Group of Picture). This GOP is a minimum picture unit which can be independently reproduced and defined in a standard of MPEG2 (Motion Picture Experts Group 2), being an image compression method and employed when picture information is recorded on the video DVD according to the present embodiment.

A_PCK includes sound information (audio data), and non -compressed data in a linear PCM or data compressed for example in a dolby digital (AC-3) system.

SP_PCK includes sub-picture information (sub-picture data). Data such as characters, pictorial devices, and graphics can be mentioned as the sub-picture information.

NV_PCK is constituted by including the above pack header, DSI_PKT (Data Search Information Packet), being search information for searching picture information or sound information to be reproduced (specifically, address and so on in a reproducing position on video DVD 1 where the picture information or sound information to be reproduced is recorded), and PCI_PKT (Presentation Control Information Packet) being information related to reproduction display control when picture or sound searched on the basis of the DSI_PKT is reproduced.

Further, PCI_PKT includes HLI (HighLight Information). The HLI is constituted by HLI_GI (HighLight Information General Information), BTN_COLIT (Button Collar Information Table), and BTNIT (Button Information Table).

In this, "button" means a selectable item displayed so as to be selectable. Such the button is for example, a selection button provided inside a menu and displayed on a background of a main picture on a display screen. For example, when a user (a viewer) operates an operation unit to designates (for example, by pointing out with a cursor) a desirable selection button by moving a cursor, and then the selection of a desirable selection button is firmed (by pushing down the operation button in the input unit), a command corresponding to the selection button is executed and the title is reproduced. Further, the selection button is highlighted (displayed by emphasizing a button by a change of button color or the like) when the selection is done and firmed.

HLI_GI is information related to all-around highlight information, and is constituted by information indicative of highlighted state, information indicative of a highlight start point, information indicative of an highlight end point, information indicative of a mode of button to be displayed, information indicative of a button starting number showing from which button the button to be displayed is started, number of buttons being the total number of buttons to be displayed, and so on.

BNT_COLIT is a table for defining color change of the buttons or the like with respect to each of the buttons in the highlight display.

BTNIT is constituted by one or more BTNI#1 to BTNI#n (BTNI: Button Information). For example, BTNI#1 designates button information having a button number of "1", BTNI#2 designates button information having a button number of "2", and BTNI#n designates button information having a button number of "n". Further, each BNTI (represented by BNTI #1, as an example) is constituted by BTN_POSI (Button Position) for stipulating a region where the button occupies; AJBTN_POSI (Adj oin Button Position) for stipulating a relationship between the button and a button adjoining thereto; and BTN_CMD(Button Command) being command information for stipulating a command which is executed when the button is selected and firmed. There is stipulated in this BTN_CMD, for example, a command to make a cell having an ID number "n" transit. By executing such the command, picture information, sound information, and so on, which are stored in a cell at a transition destination are developed and reproduced. However, in a conventional BTNI, it is possible to know what stored in the cell at the destination only after the above command is executed.

In the present embodiment, DST_INFO (Destination Information), as specified information for specifying the picture information, the sound information, and so on to be reproduced upon execution of the command is stored in BTNI in association with BTN_CMD (for example, one byte is added) . For example, this DST_INFO includes information (for example, title number, name, attribute and so on of title, or number, name, attribute, and so on of chapter) indicative of contents of the picture information, the sound information, and so on in order to specify the picture information, the sound information, and so on to be reproduced. Accordingly, by referring to this DST_INFO, it is possible to discriminate what information is stored in the cell at the transition destination before the command is executed (in other words, a state after a next transition).

### (2) Data Structure of Audio DVD

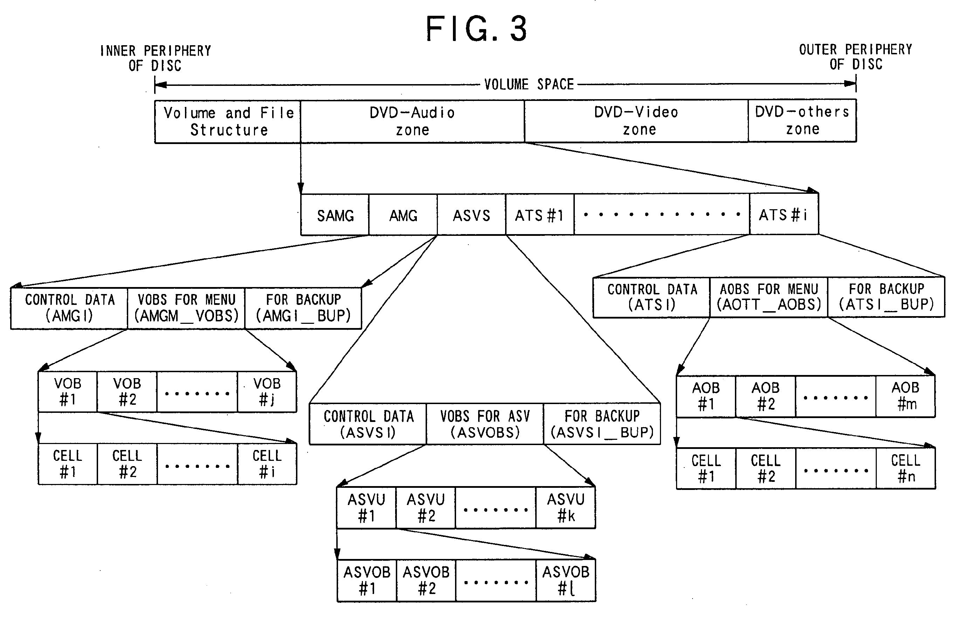

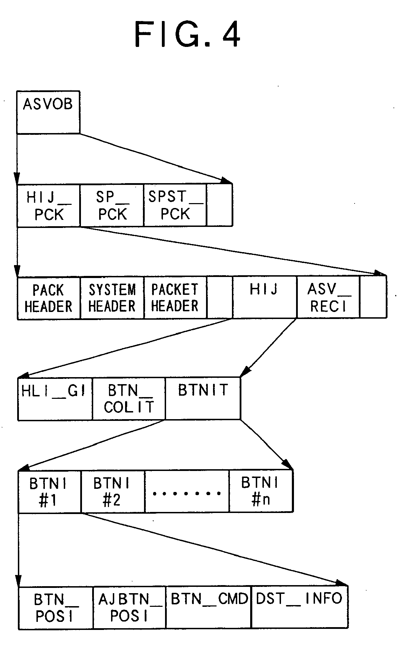

First, in reference of Figures 3 and 4, a logical data structure (format) in an audio DVD is described. In explaining the logical data structure in the audio DVD, explanation overlapping the above explanation in the logical data structure of the video DVD is omitted.

Figures 3 and 4 are drawings showing the logical data structure in the audio DVD.

As shown in Figure 3, the volume space of the audio DVD is roughly separated into a Volume and Filestructure where control information of the logical format in compliance with both standards of UDF and ISO966, a DVD-Audio zone, a DVD-video zone, and a DVD-others zone. Among these, the DVD-Audio zone and the DVD-video zone are data storing regions for recording DVDdata including the recording information and the reproduction control information according to the present application. Further, all information necessary for reproducing the DVD data is stored (recorded) in the DVD-Audio zone and the DVD-video zone. Since the logical data structure in the DVD-Video zone is similar to the video DVD 1 described above, explanation thereof is omitted. In the audio DVD 2, the DVD-Audio zone is ordinarily used.

The DVD-Audio zone is made up of one SAMG (Sample Audio Manager), zero or one AMG (Audio Still Video Set), and one or more and ninety-nine or less ATS #1 to ATS #i (ATS: Audio Title Set).

AMG is constituted by AMGM_VOBS (Video Object Set for AMG Menu) for AMG menu which is a substance of reproduction stream; AMGI (Audio Manager Information), being PGCI as reproduction control information related to a reproduction method of AMGM_VOBS, control information indicative of reproducing stream attribute, or the like; and AMGI_BUP being back up data of AMGI.

Each of the ATS #1 to ATS #i is constituted by AOTT_AOBS (Audio Object Set for Audio Title) for title, being substance of reproduction stream; ATSI (Audio Title Set Information) being PGCI as reproduction control information related to a reproduction method of AOTT_AOBS, control information indicative of reproducing stream attribute, or the like; and ATSI_BUP, being back up data of ATSI.

The above AMGM_VOBS is constituted by one or more VOB #1 to VOB #j, AOTT_AOBS is constituted by one or more AOB #1 to AOB #m, further these VOBs and AOBs are respectively made up of a plurality of cells. Logical data structures in each cell are substantially similar to the cells in the above-described video DVD. However, the HLI (Highlight information) is stored in the ASVS.

The ASVS is constituted by ASVOBS (Video Object Set for Audio Still Video) for ASV, being a substance of still image; ASVSI (Audio Still Video Set Information) indicative of attributes or the like of ASVOBS; and ASVSI_BUP, being backup data of ASVSI.

ASVOBS is made up of one or more ASVU #1 to ASVU #k (ASVU: Audio Still Video Unit), and further each of the ASVUs is made up of one or more of ASVOB #1 to ASVOB #1 (ASVOB: Audio Still Video Object).

Each ASVOB is made up by including HLI_PCK (HighLight Pack), SP_PCK (Sub-picture Pack), and so on, as shown in Figure 4. HLI (HighLight Information) is included in HLI PCK. Since a logical data structure in HLI is similar to that in the above -described video DVD1, description thereof is omitted. Further, the SP_PCK includes sub-picture information (sub-picture data) in a manner similar to that in the above-described video DVD1.

### (3) Structure and Function of DVD Reproducing Apparatus

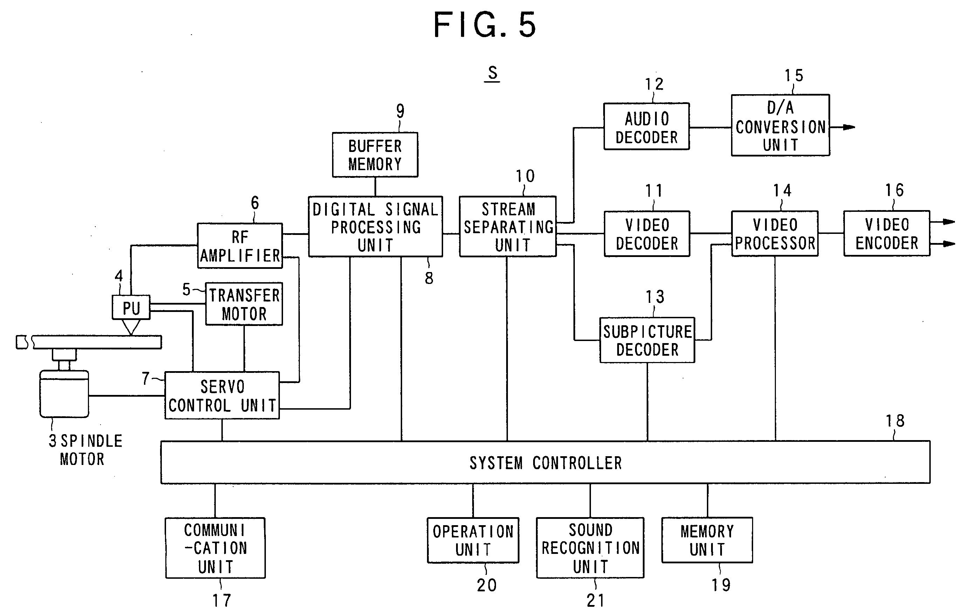

First, in reference of Figure 5, structure and function of the DVD reproducing apparatus according to the embodiment will be described.

Figure 5 shows a schematic structural example of the DVD apparatus according to this embodiment.

As shown in Figure 5, the DVD reproduction apparatus S includes:
a spindle motor 3 which drives to rotate DVD (video DVD 1 or audio DVD 2) installed at a predetermined clamping position at a predetermined linear speed (or angular speed);
an optical pickup 4 which optically reads out information recorded on DVD and conducts photoelectric transfer of the information thus read into electric signal;
a transfer motor 5 which moves the optical pickup 4 in a radius direction of DVD;
an RF amplifier 6;
a servo control unit 7;
a digital signal processing unit 8;
a buffer memory 9;
a stream separating unit 10
a video decoder 11;
a audio decoder 12;
a subpicture decoder 13;
a video processor 14;
a D/A conversion unit 15;
a video encoder 16;
a communication unit 17;
a system controller 18;
a memory unit 19;
an operation unit 20; and
a sound recognition unit 21.

A plurality of DVDs are accommodated in, for example, a disc accommodating unit (not shown). Any one of the DVDs is selected and mounted at the predetermined clamping position with a disc changer.

The RF amplifier 6 generates an RF (radio frequency) signal from an electric signal outputted from the optical pickup 4 and outputs it to the digital signal processing unit 8, and further generates various error signals such as a tracking error and a focus error from the electric signal and outputs these to the servo control unit 7.

The servo control unit 7 carries out servo control (focus servo, tracking servo, rotation servo, carriage servo, or the like) with respect to the spindle motor 3, the optical pickup 4, and the transfer motor 5 on the basis of various error signals from the RF amplifier 6 and a synchronous error signal which is detected by the digital signal processing unit 8.

After the RF signal is subjected to A/D conversion, the digital signal processing unit 8 carries out a signal demodulation process and an error correction process in compliance with a standard of DVD-Video or DVD-Audio, and temporarily stores the demodulated data thus obtained in the buffer memory 9. Further, the demodulated data thus stored are outputted to the stream separating unit 10 and the system controller 18, and the synchronous error signal obtained by the demodulation and error processes is supplied to the servo control unit 7.

The stream separation units 10 separates and extracts the above-mentioned NV_PCK (navigation pack), V_PCK (video pack), A_PCK (audio pack), SP_PCK (sub-picture pack), HLI_PCK (highlight pack), or the like. The NV_PCK and HLI_PCK thus separated and extracted are supplied to the system controller 18; the V_PCK is supplied to the video decoder 11; the A-PCK is supplied to the audio decoder 12; and the SP_PCK is supplied to the sub-picture decoder 13. By supplying the NV_PCK or HLI_PCK, the system controller 18 obtains HLI (highlight information) including the above-mentioned BNTI (button information).

The video decoder 11 conducts a predetermined decode process with respect to V_PCK, and outputs the picture information (video data) thus decoded to the video processor 14.

The audio decoder 12 generates sound information (audio data) by providing the A_PCK with a predetermined decode process, and outputs it to the D/A converter 15 when the sound information (audio data) is compressed and recorded in a Dolby digital (AC-3) system. On the other hand, the audio decoder 12 outputs A_PCK to the D/A converter 15 without conductiong a decode process when the sound information is recorded uncompressed in a linear PCM system.

In the D/A converter 15, the sound information (audio data) outputted from the audio decoder 12 is converted into an analogue audio signal of an audio frequency band, and the analogue audio signal thus converted is outputted.

The sub-picture decoder 13 produces the above-mentioned sub-picture information (sub-picture data) by providing a predetermined decode process with respect to SP_PCK, and outputs the sub-picture information thus produced to the video processor 14.

The video processor 14 produces picture information (video data) or sub-picture information (sub-picture data), supplied from the video decoder 11 upon an instruction from the system controller 18, and outputs the picture data thus produced to the video encoder 16. Further, the video processor 14 produces picture data by combining the picture information (picture data) and the sub-picture information (sub-picture data), supplied from the video decoder 11 and sub-picture decoder 13, and outputs the picture data to the video encoder 16.

The video encoder 16 converts picture data to digital video data or a composite signal, and outputs thus converted. The video encoder 16 displays a content, such as a movie, or a menu for user on a display screen of monitor by supplying the digital video data or composite signal to the monitor (not shown).

The communication unit 17 connects a server connected to a network such as internet in conformity with an instruction from the system controller 18, and conducts data communication with the server.

The system controller 18 includes a CPU having calculation function, a working RAM, a ROM, and so on. The operation unit 20, as an input means, for inputting a desirable instruction by a user, the sound recognition unit 21, as an input means, for inputting a desirable instruction with voice by the user, the memory unit (e.g. HDD (Hard Disc Drive)) for memorizing various data and programs, and a non-volatile memory (e.g. EEPROM) 19 are connected to the system controller 18, where the programs includes information reproduction processing program, which for example may be downloaded from a server on internet, or served as a recording medium such as CD-ROM having the programs recorded on it.

When the CPU executes the program recorded in the memory unit 19, the system controller 18 totally controls the DVD reproduction apparatus S in its entirety to thereby reproduce information recorded on the DVD, and outputs it (video output, sound output). Further, the CPU functions as a designated information acquiring means, a specified information acquiring means, a specified information searching means, and a command execution means.

Specifically, the system controller 18, as a designated information acquiring means, acquires the designated information (e.g. chapter number, information indicative of main) for designating recorded information to be reproduced. The designated information may be recorded on a memory unit 19 in advance by, for a example, a user or a manufacturer, or may be inputted on a case-by-case basis.

The system controller 18, as the specified information acquiring means, searches the specified information corresponding to the designated information thus acquired in a plurality of DST_INFOs (information at transition destination) thus acquired, after acquiring DST_INFO (information at transition destination) contained in a plurality of cells recorded on the DVD, (namely after acquiring from BTN_POSI (Button Position Information) contained in NV_PCK (Navigation Pack) from the stream separating unit 10. For example, DST_INFO (information at transition destination), which matches the designated information, or DST_INFO (information at transition destination), which contains the designated information, is acquired. It is also possible to search the DST_INFO (information at transition destination) corresponding to the designated information by storing a table indicative of a relationship between the designated information and the DST_INFO (information at transition destination), and referring to the table.

The system controller 18, as the command execution means, conducts a command stipulated in BTN_CMD (button command) corresponding to DST_INFO (information at transition destination) thus searched. Namely, before the selection button is pushed by for example a user, a command corresponding to the selection button is automatically executed (Command Automatic Process), and the video information, the sound information, or the like, which is stored in a cell at a transition destination, is reproduced and outputted.

### (4) Reproduction Operation of DVD Reproducing Apparatus

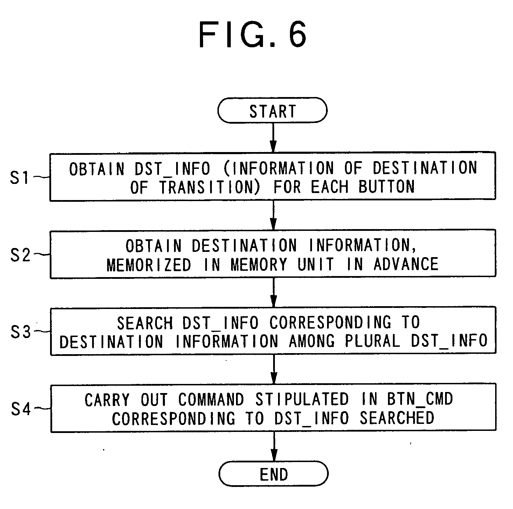

Next, in reference of Figures 6 to 8, the command automatic execution process in the reproduction operation by the DVD reproduction apparatus S will be described. Figures 6 to 8 are a flow chart indicative of the command automatic execution process of the system controller 18, respectively according to Embodiments 1 to 3. Since the reproduction output operation (operation of various constitutional elements in the DVD reproduction apparatus S) recorded on the DVD is well known, a detailed explanation is omitted.

### (Embodiment 1)

In Embodiment 1, an example is explained that a command is automatically executed before a menu to be displayed is executed.

First, when a DVD is loaded into the DVD reproduction apparatus S, a DVD is loaded, and information such as VMG is reproduced from the DVD thus loaded. For example, VMGI or the like is sent to the system controller 18 through the digital signal processing unit 8, and NV_PCK (Navigation Pack) is sent to the system controller 18 through the stream separating unit 10.

Next, the system controller 18 receives NV_PCK, VMGI, or the like as shown in Figure 6, acquires DST_INFOs (information at transition destination) of each button out of BTN_POSI (button position information) included in NV_PCK, and temporarily memorizes in the RAM (Step S1).

The DST_INFO thus obtained is, for example, transition destination information (e.g. information indicative of chapter selection) corresponding to a button 1 on a title (selection) menu, transition destination information (e.g. information indicative of "PLAY" of reproducing a main) corresponding to button 2, transition destination information (e. g. information indicative of reproduction of promotion video) corresponding to button 3, or the like (A similar operation is applicable to the following Embodiments 2 and 3).

Then the system controller 18 acquires the designated information (e.g. information indicative of "PLAY" of reproducing the main) memorized in the memory unit 19 in advance, and temporarily memorizes the designated information in the RAM (Step S2).

Next, the system controller 18 searches a DST_INFO corresponding to the designated information thus obtained out of a plurality of DST_INFOs corresponding to the designated information thus obtained (Step S3). In this, for example, transition destination information corresponding to the button 2 is searched (for example, information "PLAY" indicative of reproduction of a main) is searched.

Next, the system controller 18 executes a command stipulated by BTN_CMD corresponding to the DST_INFO thus searched (Step S4). For example, it is controlled to reproduce the video information, sound information, or the like, which are included in the cell at the transition destination. Accordingly, for example, reproduction and output of mains of the video information, the sound information, and so on are carried out before a menu is displayed on a monitor.

### (Embodiment 2)

In Embodiment 2, an example that a command is automatically executed after a lapse of a predetermined time after displaying a menu to be displayed will be described.

First, when a DVD is loaded on the DVD reproduction apparatus S, information in such as VMG is reproduced from the DVD thus loaded. For example, VMGI and so on are sent to the system controller 18 through the digital signal processing unit 8, and simultaneously NV_PCK (Navigation Pack) is sent to the sytem controller 18 through the stream separating unit 10. Further, at this time, time count is started by the system controller 18.

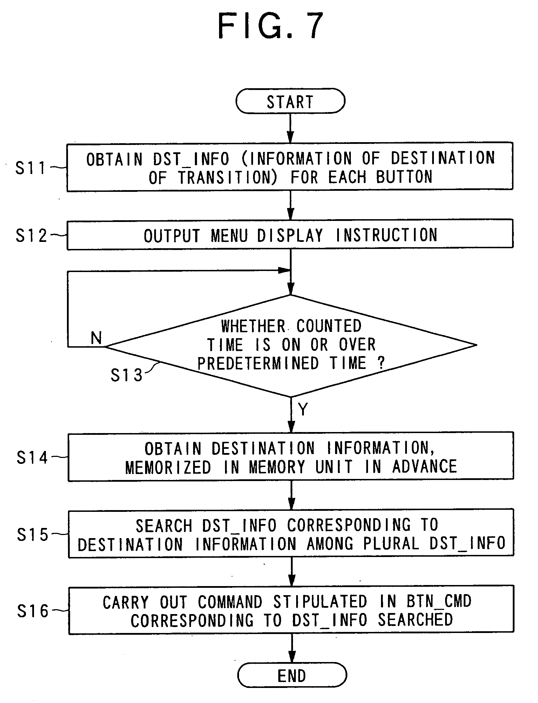

Thereafter, as shown in Figure 7, the system controller 18 receives NV_PCK, VMGI, or the like, acquires DST_INFOs (information at transit destination) respectively of the buttons from BTN_POSI (Button Position Information) included in NV_PCK, and temporarily memorizes these in the RAM (Step S11).

Next, the system controller 18 constructs information for displaying the menu on the basis of information (e. g. PGCI and HLI (highlight information)) contained in NV_PCK, VMGI, or the like, and outputs it to the video processor 14 along with a menu display instruction. Accordingly, the video processor 14 produces menu picture data (including selection button) in use of sub-picture information (sub-picture data), supplied from the video decoder 11 in accordance with the menu display instruction, and outputs these to the video encoder 16. Then the menu is displayed on a monitor (not shown) with the video encoder 16.

Next, the system controller 18 discriminates whether or not the time thus counted passed over a predetermined time (for example, several dozens of seconds)in Step S13. When the predetermined time elapses (Step S13: Y), designated information (for example, information "PLAY" indicative of a main is reproduced) memorized on the memory units 19 in advance as in the Embodiment 1, is acquired and temporarily memorized in the RAM (Step S14).

In Steps S15 to S16, in a manner similar to that in the Embodiment 1, DST_INFO corresponding to the designated information thus acquired is searched and a command stipulated in BTN_CMD corresponding to DST_INFO thus searched is executed.

### (Embodiment 3)

In Embodiment 3, an example that the command corresponding to words uttered by a user is automatically executed will be described.

First, when a DVD is loaded into the DVD reproducing apparatus S, information such as VMG is reproduced by the loading, VMGI and so on are sent to the system controller 18 through the digital signal processing unit 8, and simultaneously NV_PCK (navigation pack) is sent to the system controller 18 through the stream separating unit 10.

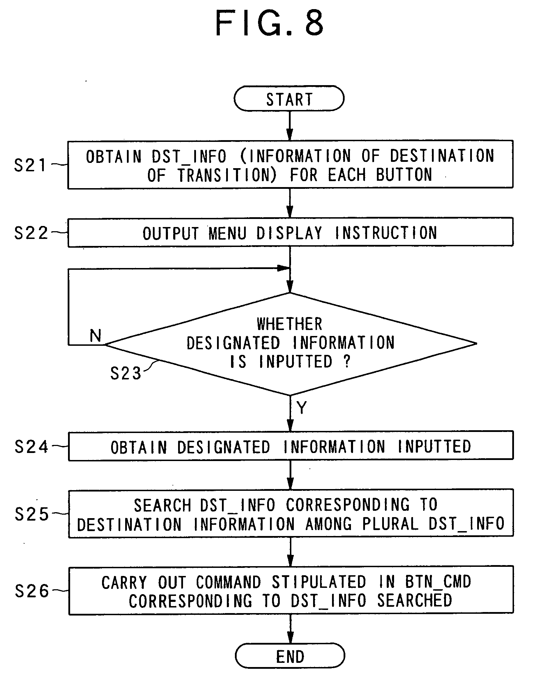

Next, as shown in Figure 8, the system controller 18 receives NV_PCK, VMGI, and so on, acquires DST_INFO (information at transition destination) of DST__INFO of each button from BTN_POSI (Button Position Information) contained in NV_PCK, and temporarily memorizes it in the RAM (Step S21) .

Next, in a manner similar to the Embodiment 2, the system controller 18 forms information for displaying a menu on the basis of information (for example, PCGI and HLI (highlight information)) included in NV_PCK, VMGI, or the like, and outputs thus formed to the video processor 14 along with instruction of displaying the menu (Step S22).

Next, the system controller 18 monitors (discriminates) input of the designated information from the sound recognition unit 21 (Step S23). For example, when a user utters a word "PLAY", being information indicating that a main is reproduced, the sound recognition unit 21 receives the word thus uttered with a microphone (not shown), analyzes and recognizes the word, and supplies the word "PLAY" thus recognized to the system controller 18 as the designated information. Accordingly, the system controller 18 acquires the designated information (for example, information "PLAY" indicating that the main is to be reproduced) of the sound inputted from the user through the sound recognition unit 21, and temporarily memorizes it in the RAM. Detailed explanation of the sound recognition in the sound recognition unit 21 is omitted, and a known technique is applicable thereto. However, for example, the sound is recognized by selecting the most suitable candidate out of candidates, prepared in advance.

In Steps S25 to S26, as in Embodiment 1, DST_INFO corresponding to the designated information thus acquired is searched, and a command stipulated in BTN_CMD (button command) corresponding to DST_INFO thus searched is executed.

As described above, according to the embodiment, since it is constructed such that DST_INFO (information at transition destination) for specifying recorded information such as picture information, sound information, and so on, which are to be reproduced, is recorded on a DVD in advance, the DVD reproducing apparatus S can specify a content of the picture information, the sound information, and so on, to be reproduced. Therefore, it is possible to discriminate a state to be transited next. Accordingly, it is possible to specify a content or the like before the contents and so on of the picture information, the sound information, and so on are specified by executing the command.

Further, the DVD reproducing apparatus S is constituted so as to acquire DST_INFO (information at transition destination) corresponding to each of the buttons recorded on the DVD , further acquire the designated information, which is memorized in the memory unit 19 or designated information inputted by the user, search DST_INFO (information at transition destination) corresponding to the designated information thus acquired among DST_INFO (information at transition destination) thus acquired, and execute a DST_INFO command thus searched. Therefore, it is possible to automatically reproduce recorded information desired by the user without a user's selection of selecting the selection button.

Meanwhile, although DST_INFO (information at transition destination) is constituted so as to be added in each BTNI (button information) in this embodiment, the invention is not limited thereto. For example, DST_INFO (information at transition destination) may be constituted so as to add (record) information to a memory region, which totally controls information related to a plurality of buttons. For example, it is possible to constitute such that DST_INFOs (information at transition destination) corresponding to a plurality of buttons are collected and added to BTNIT (Button Information Table), or a DST_INFO table is added in an upper place than that of BTNIT (for example, adding to a layer same as that of HLI_GI (Highlight Ordinary Information) inside HLI (Highlight Information)). According to the structure, it is possible to acquire DST_INFO (information at transition destination) in a lump without individually acquiring DST_INFOs (information at transition destination) from BNTI (button information) corresponding to each button.

Further, in this embodiment, a case where the recording medium of the present application is applied to a DVD is explained, the invention is not limited thereto. The embodiment is also applicable to an information recording medium of another type having a logical data structure similar to DVD. Further, in the embodiment, although the case where the information reproducing apparatus of the present invention is applied to a DVD reproducing apparatus has been described, the present invention is not limited thereto, and can be applied to a DVD reproducing and recording apparatus. Further, the present invention can be applied to a reproducing apparatus and an information recording apparatus which reproduces information from an information recording medium of another type.

## Claims

1. An information recording medium for recording
recorded information which is separated into at least a plurality of pieces;
reproduction control information for reproducing the recorded information;
sub-picture information constituting selection items displayed so as to be selectable; and
command information stipulating a command which is executed when the selection item is selected and firmed, wherein
specified information for specifying the recorded information to be reproduced by executing the command is recorded on the information recording medium.

2. The information recording medium according to Claim 1, wherein
the selection items are plural, and
the specified information is recorded in association with the command information which is recorded with respect to each of the selection items.

3. The information recording medium according to Claim 1, wherein
the selection items are plural, and
the specified information is recorded in a memory region where information related to the plurality of selection items are administrated in a lump.

4. The information recording medium according to any one of Claims 1 to 3, wherein
the specified information contains information indicative of recording information to be reproduced.

5. An information reproducing apparatus for reproducing recorded information, recorded on the information recording medium according to any one of Claims 1 to 4, further comprising:
a designated information acquiring means for acquiring designated information for designating recorded information to be reproduced;
a specified information acquiring means for acquiring the specified information, which is recorded on the information recording medium;
a specified information searching means for searching the specified information corresponding to the designated information thus acquired out of the designated information thus acquired; and
a command executing means for executing a command stipulated in command information, corresponding to the specified information thus searched.

6. The information reproducing apparatus according to Claim 5, wherein
the designated information acquiring means acquires the designated information, which is inputted by a user through an input means.

7. An information reproducing method recited for reproducing the recoded information, recorded on the information recording medium, according to any one of Claims 1 to 4, comprising steps of:
obtaining the designated information for designating the recorded information to be reproduced;
acquiring the specified information recorded on the information recording medium;
searching the specified information corresponding to the designated information thus acquired out of the specified information thus obtained; and
executing a command stipulated by command information corresponding to the specified information thus searched.

8. An information reproduction processing program for causing a computer for reproducing the recorded information, recorded on the information recording medium according to any one of Claims 1 to 4, to function as:
a designated information acquiring means for acquiring designated information, which designates the recorded information to be reproduced;
a specified information acquiring means for acquiring the specified information, recorded on the information recording medium;
a specified information searching means for searching the specified information corresponding to the designated information thus acquired out of the specified information thus acquired; and
a command execution means for executing a command stipulated by the command information, corresponding to the specified information thus searched.

9. The information recording medium according to Claim 8, wherein
the information reproduction processing program is recorded so as to be readable by a computer.
